# EUROPEAN PATENT APPLICATION

(11) **EP 4 687 311 A1**
(43) Date of publication of application: **04.02.2026**
(21) Application number: 25193180.4
(22) Date of filing: 31.07.2025
(51) Int. Cl.: H04B 7/185

(54) **COMMUNICATION METHOD AND DEVICE THROUGH BASE STATION INTERFACE**

(30) Priority: 01.08.2024 KR 20240102753; 11.07.2025 KR 20250093733
(71) Applicant: KT Corporation, Seongnam-si, Gyeonggi-do 13606 (KR)
(72) Inventor: HONG, Sung Pyo, Seongnam-si, Gyeonggi-do 13606 (KR)
(74) Representative: Santarelli

(57) **Abstract**

Provided are a method and device for performing communication by a regenerative payload base station. The method may include transmitting an NG removal request message to a core network entity, receiving an NG removal response message from the core network entity, and initiating a transport network layer (TNL) connection removal operation for the core network entity and removing resources associated with an interface instance.

## Description

### CROSS-REFERENCE TO RELATED APPLICATION

This application claims priority from Korean Patent Application Nos. 10-2024-0102753, filed on August 1, 2024, and 10-2025-0093733, filed on July 11, 2025, which are hereby incorporated by reference for all purposes as if fully set forth herein.

### BACKGROUND

### Field

The disclosure relates to technology for controlling communication operations using an interface between a base station and a core network entity.

### Description of Related Art

As smartphones proliferate and wireless communication devices are used for various purposes, data transmissions and receptions using wireless communication technology are soaring. The importance of low latency is increasingly emphasized, development of a post-LTE, next-generation wireless communication technology (New RAT) is underway.

Further, the number of UEs performing communication using wireless communication technology is rapidly increasing, and the demand for communication in various environments and locations is increasing. In this situation, there is a need to support wider coverage and enable communication services even in environments where deployment of wired base stations is not feasible.

To that end, research is being conducted on non-terrestrial networks that are linked to the core network wirelessly in the air rather than base stations built on the ground. A non-terrestrial network (NTN) refers to a network or a network segment that utilize airborne platforms, such as high altitude platform (HAPS), or spaceborne platforms, such as satellites, for communication transmission.

However, in the case of non-terrestrial networks that have been developed to date, the NTN payload is mounted on a satellite or a high altitude platform station and functions as a network node for providing connectivity between a service link and a feeder link. The NTN payload has typically been a transparent payload, merely relaying data through an NTN gateway. Therefore, there were various constraints from the base station perspective.

### BRIEF SUMMARY

The disclosure aims to provide a method and device for controlling an interface of a regenerative payload base station in a non-terrestrial network communication system.

In one aspect, a method may be provided for performing communication by a regenerative payload base station. The method may include transmitting an NG removal request message to a core network entity, receiving an NG removal response message from the core network entity, and initiating a transport network layer (TNL) connection removal operation for the core network entity and removing resources associated with an interface instance.

In another aspect, a method may be provided for performing communication by a core network entity with a regenerative payload base station. The method may include receiving an NG removal request message from the regenerative payload base station and removing resources associated with an interface instance of the regenerative payload base station and transmitting an NG removal response message to the NG removal request message to the regenerative payload base station.

In yet another aspect, a regenerative payload base station device may be provided for performing communication. The regenerative payload base station may include a transmitter transmitting an NG removal request message to a core network entity, a receiver receiving an NG removal response message from the core network entity, and a controller initiating a transport network layer (TNL) connection removal operation for the core network entity and removing resources associated with an interface instance.

In yet another aspect, a core network entity device may be provided for performing communication with a regenerative payload base station. The core network entity device may include a receiver receiving an NG removal request message from the regenerative payload base station, a controller removing resources associated with an interface instance of the regenerative payload base station, and a transmitter transmitting an NG removal response message to the NG removal request message to the regenerative payload base station.

According to the embodiments of the present disclosure, communication may be performed by controlling an interface of a regenerative payload base station in a non-terrestrial network communication system.

### Description of Drawings

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a view illustrating a typical transparent payload-based NTN structure;
FIG. 9 is a view illustrating a regenerative payload-based NTN structure according to an embodiment;
FIG. 10 is a flowchart illustrating an operation of a regenerative payload base station according to an embodiment;
FIG. 11 is a flowchart illustrating an operation of a core network entity according to an embodiment;
FIG. 12 is a block diagram illustrating a regenerative payload base station according to an embodiment; and
FIG. 13 is a block diagram illustrating a core network entity according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

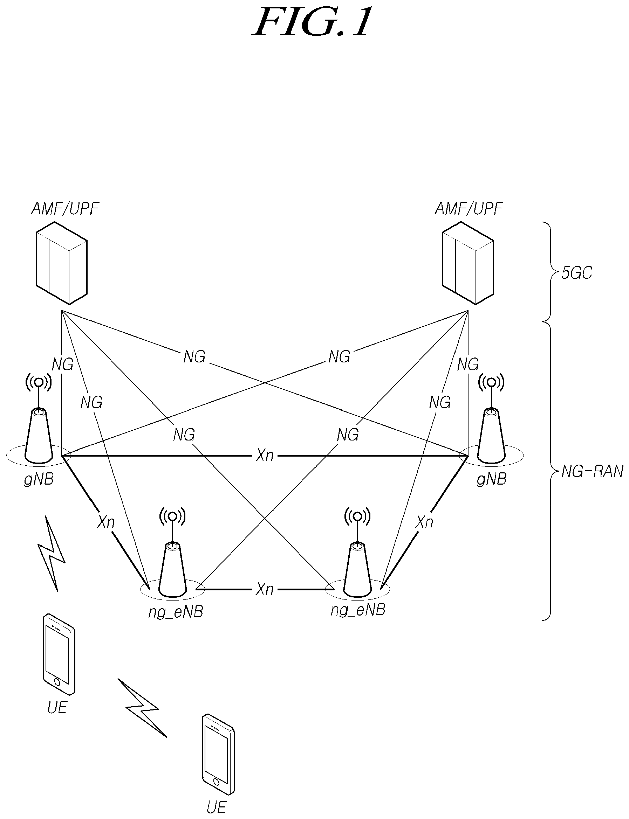

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

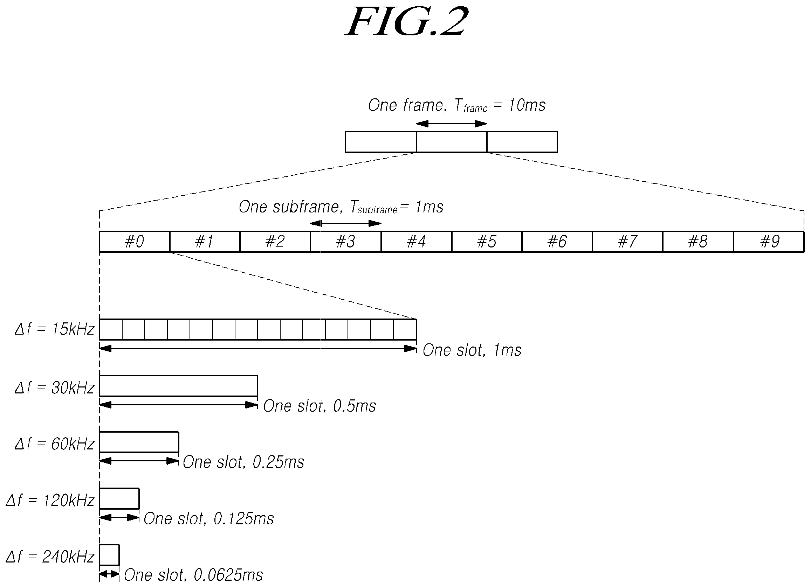

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

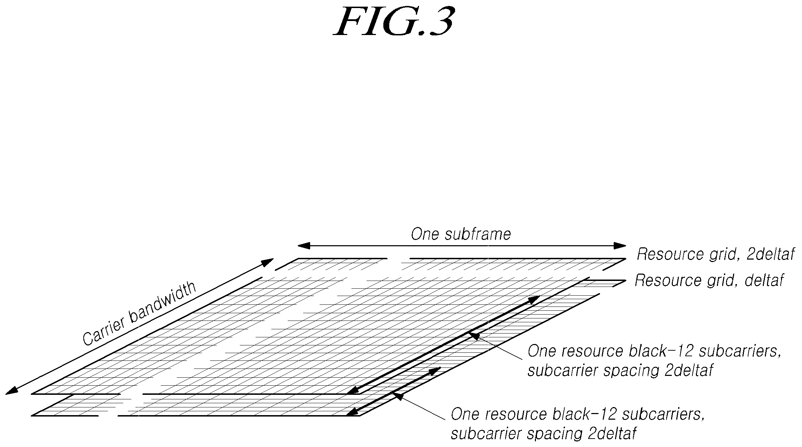

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

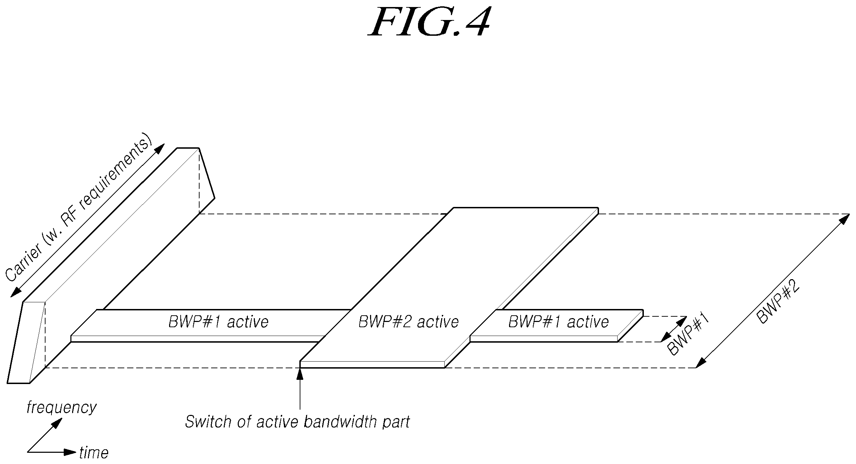

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

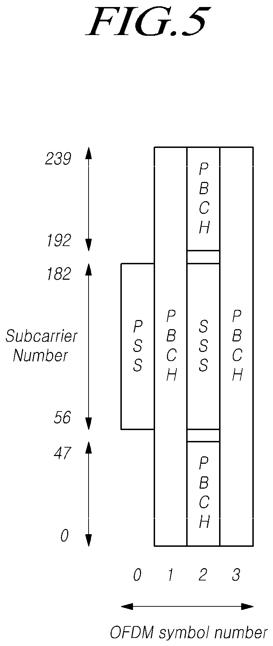

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB 1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

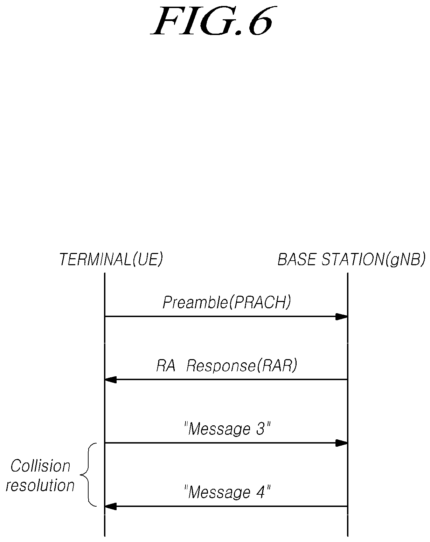

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

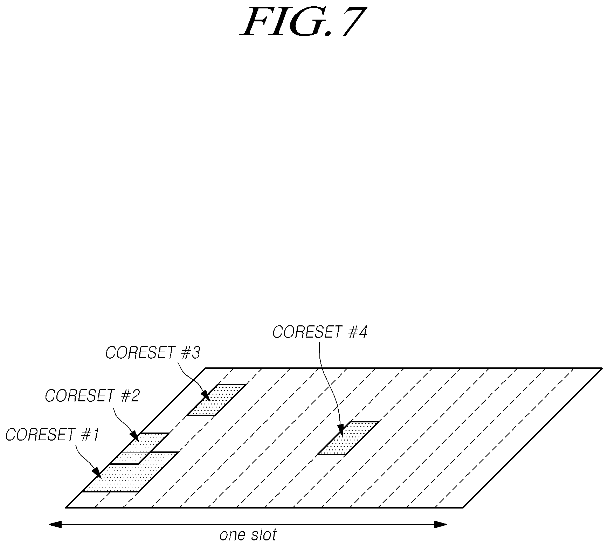

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

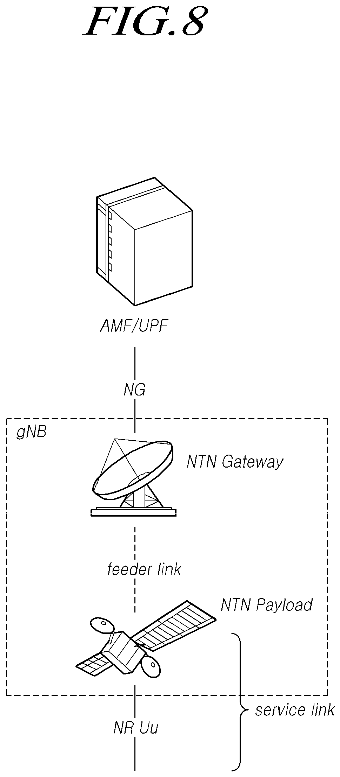

FIG. 8 is a view illustrating a typical transparent payload-based NTN structure.

Referring to FIG. 8, 3GPP has standardized transparent payload-based NTN functions through standardization of non-terrestrial networks (NR NTN)specifications. In typical NTN systems, NR access for user equipment (UE) is provided via an NTN transparent payload and an NTN gateway.

Here, the NTN payload refers to a network node installed on a satellite or high altitude platform station, providing connectivity functions between the service link and the feeder link. In the current version of this specification, the NTN payload is a transport network layer (TNL) node.

In the prior art, an NTN gateway refers to a terrestrial station positioned on the Earth's surface that provides connectivity to an NTN payload using a feeder link. Typical NR NTN specifications supported only operation via a transparent payload. The corresponding NTN transparent payload supporting base station could be connected on the ground to other (NTN transparent payload supporting) base stations through an Xn interface. Further, the NTN transparent payload supporting base station could be connected on the ground to a core network node (e.g., AMF/UPF) through an NG interface.

However, in the case of an NTN regenerative payload, since a base station is mounted on a satellite, it is difficult to assume that connections between base stations or between a base station and a core network node are always maintained. Therefore, the typical architecture faced challenges in reliably maintaining a base station interface.

Moreover, typical mobile communication technologies did not provide a specific method for supporting regenerative payload-based NTN, which hindered stable maintenance of the interface with an NTN regenerative payload base station.

To solve these problems, the disclosure proposes a method and a device for providing a regenerative payload base station interface.

The following describes a method for providing a base station interface based on 5GS/NR technology. However, this is for convenience of description and the present embodiments may also be applied based on any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and the content of operations. Although the disclosure does not contain the content of the UE operation related to the definitions for the corresponding information elements, the corresponding content set forth in the standards known in the art may be incorporated in the present embodiments.

Any function described below is defined as an individual-UE capability (UE radio capability or UE core network capability) and may be transmitted by the UE/device to the base station/core network entity (e.g. AMF/SMF) through corresponding signaling. Alternatively, arbitrary functions may be combined/merged to be defined as the corresponding UE capability, and transmitted to the base station/core network entity through corresponding signaling by the UE.

The base station may transmit/indicate information indicating allowing/supporting/configuring the corresponding function/function combination for any function or any function combination, described below, to the UE through any downlink message (e.g., an RRC message, MAC control element). For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The base station may transmit/indicate information for limiting/controlling any function described below, to the UE through any downlink message (e.g., an RRC message, MAC control element). For example, the prohibit timer of the corresponding function may be indicated. The corresponding prohibit timer may be start/restarted before or when the corresponding function is initiated. While the corresponding timer is running, the UE may limit/control the corresponding function not to be initiated/executed. For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The embodiments and corresponding functions described below may be performed individually and independently. The embodiments and related operations described below may be implemented by combining/merging any embodiment and related operations. This is also obviously included in the scope of the present embodiments. Any embodiment and related operations may be performed in any order.

Any information described below may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the average (expected value)/minimum/maximum/standard deviation values. This is for convenience of description, and all of the information in the disclosure may be used as statistical information. Any information described below may be information preconfigured in the UE/network or provisioned through OAM/application server/application function/UDM.

In typical NR NTN technology, an NTN supporting base station only supported an NTN transparent payload. The NTN transparent payload transparently forwarded a radio protocol received from a UE through a service link to an NTN gateway. The corresponding NTN transparent payload supporting base station could be connected on the terrestrial/earth/ground to another (NTN transparent payload supporting) base station through an Xn interface. The corresponding NTN transparent payload supporting base station could be connected on the terrestrial/earth/ground to an (NTN transparent payload supporting) core network node (AMF/UPF) through an NG interface.

Alternatively, the corresponding NTN transparent payload supporting base station could be connected on the terrestrial/earth/ground to a core network node (AMF/UPF) (supporting NG interface connection to an NTN transparent payload supporting base station) through an NG interface. Since the Xn interface and NG interface were connected mainly through a fixed transport network on the ground, there were no particular problems in using terrestrial network-based Xn interface and NG interface technologies.

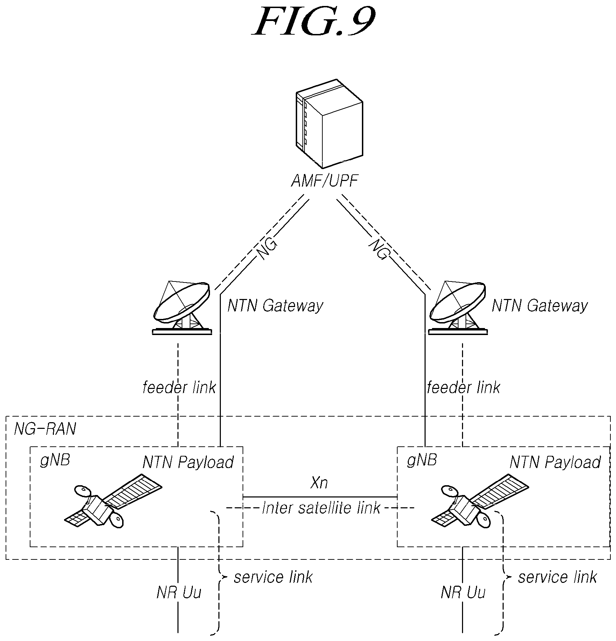

FIG. 9 is a view illustrating a regenerative payload-based NTN structure according to an embodiment.

Referring to FIG. 9, a regenerative payload supporting base station may be connected to another regenerative payload supporting base station through an Xn interface via an inter-satellite link (ISL). A regenerative payload supporting base station may be connected to a core network node (AMF/UPF) supporting a regenerative payload in a terrestrial network through an NG interface via a feeder link between an NTN payload and an NTN gateway and a transport network between the NTN gateway and the core network node. When a regenerative payload base station operates based on an NGSO satellite, since the satellite moves at high speed, it is not guaranteed that an Xn interface between base stations and an NG interface between a base station and a core network node are always available according to the satellite's movement.

In this specification, as disclosed in FIG. 9, a regenerative payload supporting base station is described as a regenerative payload base station. However, this is for convenience of description and may also be described with terms such as base station, satellite-mounted base station, regenerative payload, etc.

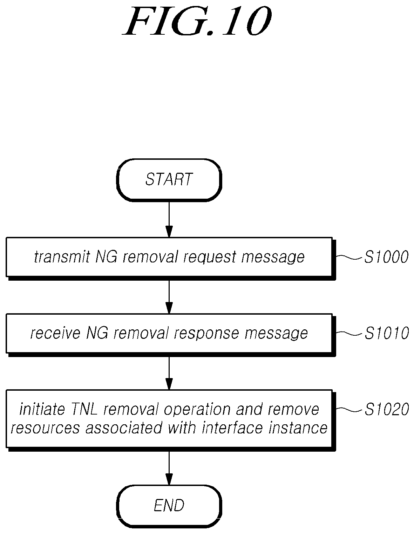

FIG. 10 is a flowchart illustrating an operation of a regenerative payload base station according to an embodiment.

Referring to FIG. 10, a method for a regenerative payload base station to perform communication may include transmitting an NG removal request message to a core network entity (S 1000).

For example, the regenerative payload base station may transmit an NG removal request message to a core network entity through an NG interface. The NG removal request message may be triggered by movement of a satellite on which the regenerative payload base station is mounted. Since the regenerative payload base station is mounted on a satellite, it moves continuously. According to the satellite's movement, a service coverage area (terrestrial area) of the regenerative payload base station may change. Therefore, transmission of an NG removal request message from a regenerative payload base station may be triggered according to satellite movement.

As described above, the regenerative payload base station is associated with another regenerative payload base station through an Xn interface via an inter-satellite link and may be associated with a core network entity through an NG interface. In other words, a regenerative payload base station is mounted on a satellite and moves and may form an Xn interface as an inter-satellite link to configure an interface with another regenerative payload base station. In other words, the Xn interface may be established over an inter-satellite link between regenerative payload base stations. Meanwhile, it may be associated with a core network entity through an NG interface. An NG interface may be configured as a feeder link between an NTN gateway and a regenerative payload base station. Between an NTN gateway and a core network entity, it may be configured as a feeder link or wired link. Meanwhile, a core network entity may be an AMF.

An NG removal procedure is a procedure that enables controlled removal of an interface instance between a regenerative payload base station and a core network entity. Through the NG removal procedure, controlled deletion or release of application level configuration data present within both nodes may be performed.

The method for the regenerative payload base station to perform communication may include receiving an NG removal response message from the core network entity (S1010).

The regenerative payload base station may receive an NG removal response message from the core network entity after transmitting the NG removal request message. This constitutes the operation of the above-described NG removal procedure. If the core network entity receives an NG removal request message from the regenerative payload base station, it may transmit an NG removal response message.

The core network entity may remove a resource associated with an interface instance of the regenerative payload base station. For example, the core network entity may remove or release all resources associated with an interface instance with the regenerative payload base station that received the NG removal request message.

The method for the regenerative payload base station to perform communication may include initiating a transport network layer (TNL) connection removal operation for the core network entity and removing any resource associated with an interface instance (S 1020).

If an NG removal response message is received, the regenerative payload base station may initiate a TNL connection removal operation for the core network entity. Further, if an NG removal response message is received, the regenerative payload base station may remove or release all resources associated with an interface instance with the corresponding core network entity.

Through these operations, the regenerative payload base station may perform a control operation for an NG interface that occurs as it moves while mounted on a satellite.

Meanwhile, when feeder link switchover occurs, the regenerative payload base station may transmit an NGAP message including indication information for requesting to suspend or resume any data and signaling procedure through an NG interface to a core network entity.

For example, the NGAP message may be an NG suspend request message or an NG resume request message. The NGAP message may include indication information indicating suspension or resumption of an NG interface.

If the core network entity receives an NGAP message, it may transmit a response message thereto. An NG suspend or resume procedure is initiated by the above-described NGAP message, and even when a regenerative payload base station moves, an NG interface may be suspended or resumed in a controlled manner through the NG suspend or resume procedure.

For example, an NG suspend or resume procedure may be defined to suspend/resume an interface instance between a regenerative payload base station and a core network node (AMF) in a controlled manner. Through the corresponding procedure, any application level configuration data present within both nodes may be suspended or resumed. For example, a supported tracking area (TA) list (with sub information such as TAC, broadcast PLMN list, configured TAC indication, radio access technology (RAT) information) may be maintained or reused without being released.

The core network entity may suspend or resume a data and signaling procedure through an NG interface based on indication information for requesting suspension or resumption.

Through the above-described operations, a procedure for NG interface control that appears as the regenerative payload base station moves while mounted on a satellite may be clarified. In other words, an NG interface may be removed through an NG removal procedure. Alternatively, an NG interface may be suspended through an NG suspend procedure. Alternatively, communication may be performed by resuming a suspended NG interface through an NG resume procedure. Through these operations, an interface control operation between a core network entity and a base station according to base station movement, which is not a major problem in existing NTN or terrestrial network communication processes, may be supported.

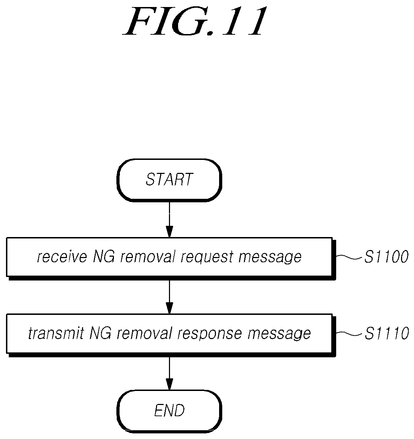

FIG. 11 is a flowchart illustrating an operation of a core network entity according to an embodiment.

Referring to FIG. 11, a method for a core network entity to perform communication with a regenerative payload base station may include receiving an NG removal request message from the regenerative payload base station (S1100).

For example, the core network entity may receive an NG removal request message from the regenerative payload base station through an NG interface. The NG removal request message may be triggered by movement of a satellite on which the regenerative payload base station is mounted. For example, a regenerative payload base station is mounted on a satellite and thus moves. According to the satellite's movement, a service coverage area (terrestrial area) of the regenerative payload base station may change. Therefore, transmission of an NG removal request message from a regenerative payload base station may be triggered based on satellite movement.

As described above, the regenerative payload base station is associated with another regenerative payload base station through an Xn interface via an inter-satellite link and may be associated with a core network entity through an NG interface. In other words, a regenerative payload base station is mounted on a satellite and moves. The regenerative payload base station may form an Xn interface as an inter-satellite link to configure an interface with another regenerative payload base station. That is, the inter-satellite link functions as an Xn interface. Meanwhile, a core network entity may be associated with a regenerative payload base station through an NG interface. An NG interface may be configured as a feeder link between an NTN gateway and a regenerative payload base station. Between an NTN gateway and a core network entity, it may be configured as a feeder link or wired link. Meanwhile, a core network entity may be an AMF.

The method for the core network entity to perform communication with the regenerative payload base station may include removing a resource associated with an interface instance of the regenerative payload base station and transmitting an NG removal response message for the NG removal request message to the regenerative payload base station (S1110).

An NG removal procedure is a procedure that enables controlled removal of an interface instance between a regenerative payload base station and a core network entity. Through the NG removal procedure, removal (deletion or release) of application level configuration data present within both nodes may be performed.

If the core network entity receives an NG removal request message, it may transmit an NG removal response message to the regenerative payload base station. This constitutes the operation of the above-described NG removal procedure. That is, upon receiving the NG removal request message, the core network entity should respond with an NG removal response message to complete the procedure.

The core network entity may remove a resource associated with an interface instance of the regenerative payload base station. For example, the core network entity may remove or release all resources associated with an interface instance with the regenerative payload base station that received the NG removal request message.

The regenerative payload base station may also initiate a transport network layer (TNL) connection removal operation for the core network entity and remove a resource associated with an interface instance.

Alternatively, upon feeder link switchover at the regenerative payload base station, the core network entity may receive an NGAP message including indication information for requesting suspension or resumption of a data and signaling procedure through an NG interface.

For example, the NGAP message may be an NG suspend request message or an NG resume request message. The NGAP message may include indication information for indicating suspension or resumption of an NG interface.

If the core network entity receives an NGAP message, it may transmit a response message thereto. An NG suspend or resume procedure is initiated by the above-described NGAP message, and even when a regenerative payload base station moves, an NG interface may be suspended or resumed in a controlled manner through an NG suspend or resume procedure.

For example, an NG suspend or resume procedure may be defined to suspend/resume an interface instance between a regenerative payload base station and a core network node (AMF) in a controlled manner. Through the corresponding procedure, any application level configuration data present within both nodes may be suspended or resumed. For example, a supported tracking area (TA) list (with sub information such as TAC, broadcast PLMN list, configured TAC indication, radio access technology (RAT) information) may be maintained or reused without release.

The core network entity may suspend or resume a data and signaling procedure through an NG interface based on indication information for requesting suspension or resumption.

Through the above-described operations, a procedure for NG interface control that appears as the regenerative payload base station moves while mounted on a satellite may be clarified. Specifically, an NG interface may be removed through an NG removal procedure. Alternatively, an NG interface may be stopped through an NG suspend procedure. Further, communication may be performed by resuming a stopped NG interface through an NG resume procedure. Through these operations, an interface control operation between a core network entity and a base station according to base station movement, which is not a major problem in existing NTN or terrestrial network communication processes, may be supported.

The following describes more various embodiments and operations of a regenerative payload base station and a core network entity in detail. Each embodiment and operation below may be performed through any combination. Further, for convenience of description below, a regenerative payload base station may be described as a regenerative payload or base station. A core network entity is described by setting an AMF as an example.

### Association of ephemeris with base station information included in signaling messages between a base station and a core network node (or timing information association considering ephemeris):

An NG setup procedure may be performed to exchange application-level configuration data for a base station node and a core network node (e.g., AMF) to properly interoperate through an NG-C interface. A base station may initiate an NG setup procedure by transmitting an NG setup request message to a core network node. A core network node may respond with an NG setup response message. An NG setup request message includes a supported tracking area (TA) list (with sub information such as TAC, broadcast PLMN list, configured TAC indication, radio access technology (RAT) information). In conventional terrestrial network-based NR technology, a base station is fixed. A tracking area of the corresponding base station also corresponds/maps to a fixed geographical area. In transparent payload-based NTN, an NGSO satellite moves but an NTN gateway is positioned in a terrestrial network. One NTN gateway may service multiple NTN payloads. One NTN gateway may operate as multiple logical base stations. In transparent payload-based NTN, a location of a base station (or reference location or location in terrestrial network or location of NTN gateway) may also be considered fixed.

An Xn connection between NTN transparent base stations, an Xn connection between an NTN transparent base station and a terrestrial TN base station, and an NG connection between an NTN transparent base station and a core network node are all connected on the ground. Therefore, the same base station interface as a terrestrial base station interface may be utilized. If an Xn interface and/or an NG interface is set up, the corresponding interface may be considered as always connected/maintained. For example, even when a transparent payload-based satellite included in the corresponding base station moves, the corresponding base station may maintain the base station by switching to another transparent payload-based satellite through a feeder link switch. An Xn and/or NG interface may be maintained.

On the other hand, in the case of regenerative payload-based NTN, a location of a base station mounted on a satellite continuously moves according to movement of an NGSO satellite. An Xn interface between NTN regenerative base stations may be connected through ISL links in non-terrestrial environments. An Xn interface between an NTN regenerative base station and an NTN transparent base station may be connected through an NTN gateway. An Xn interface between an NTN regenerative base station and a terrestrial TN base station may be connected through an NTN gateway. An NG interface between an NTN regenerative base station and a core network node may be connected through an NTN gateway. When base station interfaces are connected through an NTN gateway in this way, it may be necessary to provide the corresponding interface considering the high-speed mobility of an NGSO satellite and/or the relatively long propagation delay compared to a terrestrial network according to satellite altitude.

For example, when the corresponding regenerative payload base station moves out of coverage for connection to a core network node (or an NTN gateway connected to the corresponding core network node) that set up/connected an NG interface with the corresponding base station according to NGSO satellite movement, the corresponding NG interface may be removed/released/reset/suspended.

As an example, an NG removal procedure may be defined to remove an interface instance between the corresponding regenerative payload base station and a core network node (AMF) in a controlled manner. Through the corresponding procedure, any application level configuration data present within both nodes may be removed/deleted/released.

As another example, a regenerative base station may initiate the corresponding procedure by transmitting an NG removal request message to an AMF. The regenerative base station may determine initiation of the corresponding procedure through ephemeris information, feeder link switch information, or the like. An AMF that received the corresponding message may respond with an NG removal response message. A base station that received the corresponding response message may initiate removal of a transport network layer association (TNL association) to the corresponding AMF. The corresponding base station may remove all resources associated with the corresponding interface instance. Subsequently, the AMF may remove all resources associated with the corresponding interface instance.

As another example, an AMF may initiate the corresponding procedure by transmitting an NG removal request message to a regenerative base station. To that end, ephemeris information, feeder link switch information, or the like. may be received/configured in advance to the AMF. The AMF may determine initiation of the corresponding procedure. A base station that received the corresponding message may respond with an NG removal response message. An AMF that received the corresponding response message may initiate removal of a transport network layer association (TNL association) to the corresponding base station. The corresponding AMF may remove all resources associated with the corresponding interface instance. Subsequently, the base station may remove all resources associated with the corresponding interface instance.

As another example, an NG removal request message and/or an NG removal response message may include information about a time/timer value when the corresponding base station (and/or a cell associated/served by the corresponding base station, and/or a neighbor base station/cell of a cell served by the corresponding base station) will stop service (for a cell/area currently being covered). If the corresponding information is included in the corresponding message, the base station and/or AMF may use the corresponding information to consider removing an interface instance with the corresponding base station in advance. (Or may accept/trigger/initiate removing an interface instance with the corresponding base station before the corresponding time.)

As another example, an NG removal request message and/or an NG removal response message may include one or more pieces of information among recommended/advisory/candidate globally unique AMF identifier (GUAMI), AMF region (or AMF region ID), AMF Set ID, AMF pointer information, TNL association information that the corresponding base station may use later. The base station may perform NG setup with the corresponding AMF considering the corresponding information.

As another example, an NG removal request message and/or an NG removal response message may include next/expected/anticipated NG setup timing information. The corresponding information may be indicated through any timing information exemplified in the disclosure (e.g., absolute time information, epoch time, etc.).

As another example, an NG removal request message and/or an NG removal response message may include ephemeris information of the corresponding base station (and/or a cell associated/served by the corresponding base station, and/or a neighbor base station/cell of a cell served by the corresponding base station). If the corresponding information is included in an NG removal request/response message, the corresponding base station may consider the corresponding information. For example, it may accept/trigger/initiate setting up an interface instance with the corresponding base station at the corresponding time.

As another example, an NG reset procedure may be used to remove/release/reset an interface instance between the corresponding regenerative payload base station and a core network node (AMF) in a controlled manner. Through the corresponding procedure, any application level configuration data present within both nodes may be removed/deleted/released. Through the corresponding procedure, a radio network-related or NGAP UE-related contexts of the radio network may be initialized/removed/deleted/released.

As another example, an NG reset message may include information for indicating that all resources and/or UE contexts on the corresponding NG interface should be released and not to setup/add/create any UE context on the corresponding NG interface.

As another example, a regenerative base station may initiate the corresponding procedure by transmitting an NG reset message to an AMF. The regenerative base station may determine initiation of the corresponding procedure through ephemeris information, feeder link switch information, or like. An AMF that received the corresponding message may respond with an NG reset acknowledge message. The AMF may include information for indicating that all allocated resources and/or UE contexts on the corresponding NG interface should be released and not to setup/add/create any UE context on the corresponding NG interface.

As another example, an NG reset message and/or an NG reset acknowledge message may include information about a time/timer value when the corresponding base station (and/or a cell associated/served by the corresponding base station, and/or a neighbor base station/cell of a cell served by the corresponding base station) will stop service (for a cell/area currently being covered). If the corresponding information is included in the corresponding message, the base station and/or AMF may use the corresponding information to consider releasing resources and UE contexts allocated to the corresponding base station and the corresponding interface. (Or may accept/trigger/initiate releasing resources and UE contexts allocated to the corresponding base station interface before the corresponding time.)

As another example, an NG reset message and/or an NG reset acknowledge message may include one or more information among recommended/advisory/candidate globally unique AMF identifier (GUAMI), AMF region (or AMF region ID), AMF Set ID, AMF pointer information, and/or TNL association information that may be used later. The base station may perform NG setup with the corresponding AMF considering the corresponding information.

As another example, an NG reset message and/or an NG reset acknowledge message may include next/expected/anticipated NG setup timing information. The corresponding information may be indicated through any timing information exemplified in the disclosure (e.g., absolute time information, epoch time, etc.).

As another example, an NG reset message and/or an NG reset acknowledge message may include ephemeris information of the corresponding base station (and/or a cell associated/served by the corresponding base station, and/or a neighbor base station/cell of a cell served by the corresponding base station). If the corresponding information is included in the corresponding message, the corresponding base station may take into account the corresponding information.

As another example, an NG suspend procedure may be defined to suspend/stop an interface instance between the corresponding regenerative payload base station and a core network node (AMF) in a controlled manner. Through the corresponding procedure, any application-level configuration data present within both nodes may be suspended. For example, a supported tracking area (TA) list (with sub information such as TAC, broadcast PLMN list, configured TAC indication, radio access technology (RAT) information) may be maintained without release. However, the base station and AMF may stop any procedure and/or operation on the corresponding NG interface. In association with the corresponding procedure, a procedure for releasing UE contexts on the corresponding NG interface may be performed. For example, an AN release procedure may be performed. Alternatively, in association with the corresponding procedure, a resource (e.g., TNL association) on the corresponding NG interface may be released. UE contexts on the corresponding NG interface may be initialized/removed/deleted/released. Any UE context on the corresponding NG interface may not be setup/added/created.

As another example, when an NG resume message (or resume request message) is received, suspended application level configuration data present within both nodes on the suspended corresponding NG interface may be restored or reactivated.

As another example, when an NG resume response/acknowledge message is received in response to an NG resume request message, suspended application level configuration data present within both nodes on the suspended corresponding NG interface may be restored or reactivated.

As another example, an NG suspend request message may include information for indicating to release all resources and/or UE contexts on the corresponding NG interface and not to setup/add/create any UE context on the corresponding NG interface.

As another example, a regenerative base station may initiate the corresponding procedure by transmitting an NG suspend/resume request message to an AMF. The regenerative base station may determine initiation of the corresponding procedure through ephemeris information, feeder link switch information, etc. An AMF that received the corresponding message may respond with an NG suspend/resume acknowledge message.

As another example, an NG suspend request message and/or an NG suspend acknowledge message may include information about a time/timer value when the corresponding base station (and/or a cell associated/served by the corresponding base station, and/or a neighbor base station/cell of a cell served by the corresponding base station) will stop service (for a cell/area currently being covered). If the corresponding information is included in the corresponding message, the base station and/or AMF may use the corresponding information to consider initiating or performing suspension of resources and UE contexts allocated to the corresponding base station and the corresponding interface. (Or may accept/trigger/initiate suspending resources and UE contexts allocated to the corresponding base station interface before the corresponding time.)

As another example, an NG suspend request message and/or an NG suspend acknowledge message may include information about a time when the corresponding base station (and/or a cell associated/served by the corresponding base station, and/or a neighbor cell of a cell served by the corresponding base station) will resume service for an area currently being covered (or current corresponding AMF area/jurisdiction) (or time to resume the corresponding NG interface connection). The corresponding information is represented as an integer value between (0..549755813887), and may be represented as a time in multiples of 10 ms after 00:00:00 on Gregorian calendar date 1 January, 1900 (midnight between Sunday, December 31, 1899 and Monday, January 1, 1900). An AMF/base station that received the corresponding information may store and/or utilize the corresponding information. An AMF/base station that received the corresponding information may take into account the corresponding information.

As another example, an NG suspend request message and/or an NG suspend acknowledge message may include one or more pieces of information among recommended/advisory/candidate globally unique AMF identifier (GUAMI), AMF region (or AMF region ID), AMF Set ID, AMF pointer information, TNL association information that may be used later. The base station may perform NG setup with the corresponding AMF considering the corresponding information.

As another example, an NG suspend request message and/or an NG suspend acknowledge message may include information about the next/expected/anticipated NG setup/resume timing. The corresponding information may be indicated through any timing information exemplified in the disclosure (e.g., absolute time information, epoch time, etc.).

As another example, an NG suspend message and/or an NG suspend acknowledge message may include ephemeris information of the corresponding base station (and/or a cell associated/served by the corresponding base station, and/or a neighbor base station/cell of a cell served by the corresponding base station). If the corresponding information is included in an NG removal request/response message (e.g., NG suspend message and/or NG suspend acknowledge message), the corresponding base station may consider the corresponding information. For example, it may accept/trigger/initiate setting up/resuming an interface instance with the corresponding base station at the corresponding time.

As another example, an NG setup procedure and/or a RAN configuration update procedure and/or an AMF configuration update procedure may be performed by associating base station parameters with ephemeris information and/or timing information.

As an example, one or more information among epoch time, specific absolute time, ephemeris information at the corresponding epoch time or specific absolute time of the corresponding base station may be included in an NG setup request message and/or an NG setup response message (and/or RAN/AMF configuration update message, RAN/AMF configuration update acknowledge message). The corresponding base station may select/determine a tracking area code, RAN area code, (36-bit) cell identification information where a reference location (e.g., cell center, geographical point, geographical area) of the corresponding base station (or a (served) cell of the corresponding base station) is included at a satellite location determined according to ephemeris information (e.g., ephemerisInfo-r17) at the corresponding epoch time or absolute time. Alternatively, the corresponding base station may calculate/determine/compute a tracking area code, RAN area code, (36-bit) cell identification information currently broadcast from the corresponding base station (and/or a cell associated/served by the corresponding base station) determined according to ephemeris information. One or more information among a tracking area code, RAN area code, (36-bit) cell identification information currently broadcast from the corresponding base station (and/or a cell associated/served by the corresponding base station) may be included in an NG setup request message and/or an NG setup response message (and/or RAN configuration update message, RAN configuration update acknowledge message).

As another example, epoch time or specific absolute time of the corresponding base station, ephemeris information at the corresponding epoch time or specific absolute time may be included in an NG setup request message and/or an NG setup response message (and/or RAN/AMF configuration update message, RAN/AMF configuration update acknowledge message).

As another example, a time range (or time window)/duration during which the corresponding base station (or a (served) cell of the corresponding base station) parameter changes according to satellite movement and/or the corresponding base station parameter information for each corresponding time range/duration may be included in an NG setup request message and/or an NG setup response message (and/or RAN/AMF configuration update message, RAN/AMF configuration update acknowledge message).

The corresponding base station may determine/select/calculate/compute a tracking area code, RAN area code, (36-bit) cell identification information where a reference location (e.g., cell center, geographical point, geographical area) of the corresponding base station (or a (served) cell of the corresponding base station) is included at a satellite location determined according to ephemeris information (e.g., ephemerisInfo-r17) at epoch time or absolute time.

The corresponding base station may determine/select/calculate/compute a time range/duration during which the corresponding parameters of the corresponding base station (or a (served) cell of the corresponding base station) change according to satellite movement. For example, an example of dividing a specific period (e.g., N hours, N days) into M time ranges/durations is illustrated. Corresponding base station parameters during T0-T1 time range/duration (e.g., TAI support list, AMF area information, served/broadcast cell information list (List of Served Cells NR, with sub information Served Cell Information NR: NR-PCI, NG-CGI, TAC, RANAC (RAN area code), ···)), corresponding base station parameters during T1-T2 time range/duration (e.g., TAI support list, AMF area information, served/broadcast cell information list (List of Served Cells NR, with sub information Served Cell Information NR: NR-PCI, NG-CGI, TAC, RANAC (RAN area code), ···)), corresponding base station parameters during T2-T3 time range/duration (e.g., TAI support list, AMF area information, served/broadcast cell information list (List of Served Cells NR, with sub information Served Cell Information NR: NR-PCI, NG-CGI, TAC, RANAC (RAN area code), ···)), ···, corresponding base station parameters during T(M-2)-T(M-1) time range/duration (e.g., TAI support list, AMF area information, served/broadcast cell information list (List of Served Cells NR, with sub information Served Cell Information NR: NR-PCI, NG-CGI, TAC, RANAC (RAN area code), ···)) may be determined/selected/calculated/computed.

As another example, an NG setup request message and/or an NG setup response message (and/or RAN/AMF configuration update message, RAN/AMF configuration update acknowledge message) may include information about a time when the corresponding base station (and/or a cell associated/served by the corresponding base station, and/or a neighbor cell of a cell served by the corresponding base station) will stop service for an area currently being covered (or current corresponding AMF area/jurisdiction) (or time to stop/suspend NG interface connection). The corresponding information is represented as an integer value between (0..549755813887), and may be represented as a time in multiples of 10 ms after 00:00:00 on Gregorian calendar date 1 January, 1900 (midnight between Sunday, December 31, 1899 and Monday, January 1, 1900). A base station that received the corresponding information may store the corresponding information. An AMF/base station receiving the corresponding information may consider the corresponding information.

As another example, an NG setup request message and/or an NG setup response message (and/or RAN/AMF configuration update message, RAN/AMF configuration update acknowledge message) may include ephemeris information for transmission. The corresponding ephemeris information represents information describing orbital trajectory information or coordinates for an NTN payload. The corresponding ephemeris information may provide one or more of i) a format that includes NTN payload location and velocity state vectors, and/or ii) a format that includes Semi-major axis, Eccentricity, Argument of periapsis, Longitude of ascending node, Inclination, Mean anomaly at epoch time, and/or NTN gateway location and/or information for a feeder link switch.

NTN ephemeris information may include one or more of ephemeris of a cell (or cell list) associated with the corresponding base station, NTN payload ephemeris of an NTN payload serving cell, NTN payload ephemeris of a neighbor cell, feeder link ephemeris between the corresponding base station and AMF, (default/reference) NTN payload ephemeris of the corresponding base station.

As another example, an NG setup request message and/or an NG setup response message (and/or RAN/AMF configuration update message, RAN/AMF configuration update acknowledge message) may include feeder link related information. For example, it may include information about time ranges/durations for consecutive feeder link switches (for Quasi-Earth-fixed service link types). It may include information about consecutive serving NTN gateway schedules/times (for Earth moving service link types). The corresponding schedule/time information may be represented as one of the above-described epoch time and absolute time.

As another example, an NG setup procedure and/or a RAN/AMF configuration update procedure may be performed by determining/selecting/calculating/computing base station parameters at a specific location/time. Subsequently, a tracking area and/or AMF area/jurisdiction of the corresponding base station may be updated through a RAN/AMF configuration update procedure periodically or according to a trigger or request from O&M or the base station.

As another example, base station parameters may be selected at epoch time. Epoch time may represent a start time of a downlink subframe of the corresponding base station (or a (served) cell of the corresponding base station) indicated by SFN (e.g., sfn-r17) and subframe number (subFrameNR-r17). A tracking area code, RAN area code, (36-bit) cell identification information, AMF area information where a reference location (e.g., cell center and range, geographical point, geographical area) of the corresponding base station (or a (served) cell of the corresponding base station) is included at a satellite location determined according to ephemeris information (e.g., ephemerisInfo-r17) at the corresponding epoch time may be selected.

As another example, base station parameters may be selected at epoch time of a served cell of the corresponding base station when an NG setup procedure is initiated/triggered. The corresponding epoch time may represent a start time of a downlink subframe of the corresponding base station (or a (served) cell of the corresponding base station) indicated by SFN (e.g., sfn-r17) and subframe number (subFrameNR-r17). The corresponding epoch time information may represent information being broadcast through system information 19 in a served cell. A tracking area code, RAN area code, (36-bit) cell identification information, AMF area information where a reference location (e.g., cell center, uplink time synchronization reference point of the cell, geographical point, geographical area) of the corresponding base station (or a (served) cell of the corresponding base station) is included at a satellite location determined according to ephemeris information (e.g., ephemerisInfo-r17) at the corresponding epoch time may be selected.

As another example, base station parameters may be selected at a specific absolute time. The corresponding absolute time is represented as an integer value between (0..549755813887), and may be represented as a time in multiples of 10 ms after 00:00:00 on Gregorian calendar date 1 January, 1900 (midnight between Sunday, December 31, 1899 and Monday, January 1, 1900). A tracking area code, RAN area code, (36-bit) cell identification information, AMF area information where a reference location (e.g., cell center, geographical point, geographical area) of the corresponding base station (or a (served) cell of the corresponding base station) is included at a satellite location determined according to ephemeris information (e.g., ephemerisInfo-r17) at the corresponding absolute time may be selected.

### Association of ephemeris with base station information included in signaling between base stations (or timing information association considering ephemeris information):

An Xn setup procedure may be performed to exchange application level configuration data for two base station nodes to properly interoperate through an Xn-C interface. A base station may initiate an Xn setup procedure by transmitting an Xn setup request message to a candidate base station. The candidate base station may respond with an Xn setup response message. An Xn setup request message includes a tracking area identity (TAI) support list, AMF area information, a served cell information list (List of Served Cells NR, with sub information Served Cell Information NR: NR-PCI, NG-CGI, TAC, RANAC (RAN area code), ···), Neighbor Information NR). In typical terrestrial network-based NR technology, a base station is fixed.

A tracking area and/or AMF area of the corresponding base station also corresponds/maps to a fixed geographical area. NTN has an NGSO satellite that moves but an NTN gateway is positioned in a terrestrial network. One NTN gateway may service multiple NTN payloads. One NTN gateway may operate as multiple logical base stations. In transparent payload-based NTN, a location of a base station (or reference location or location in terrestrial network or location of NTN gateway) may also be considered fixed. Accordingly, a tracking area and/or AMF area of the corresponding base station may also be considered to map to a fixed geographical area.

An Xn connection between NTN transparent base stations, an Xn connection between an NTN transparent base station and a terrestrial TN base station, and an NG connection between an NTN transparent base station and a core network node are all connected on the ground. Therefore, the same base station interface as a terrestrial base station interface may be utilized. If an Xn interface and/or an NG interface is set up, the corresponding interface may be considered as always connected/maintained. For example, even when a transparent payload-based satellite included in the corresponding base station moves, the corresponding base station may maintain its connectivity by including another transparent payload-based satellite through a feeder link switch. An Xn and/or NG interface may be maintained.

On the other hand, in the case of regenerative payload-based NTN, a location of a base station mounted on a satellite continuously moves according to movement of an NGSO satellite. An Xn interface between NTN regenerative base stations may be connected through ISL links in non-terrestrial environments. An Xn interface between an NTN regenerative base station and an NTN transparent base station may be connected through an NTN gateway. An Xn interface between an NTN regenerative base station and a terrestrial TN base station may be connected through an NTN gateway. An NG interface between an NTN regenerative base station and a core network node may be connected through an NTN gateway. When base station interfaces are connected through an NTN gateway in this way, it may be necessary to provide the corresponding interface with consideration of high-speed movement of an NGSO satellite and/or relatively large propagation delay compared to a terrestrial network according to satellite altitude.

For example, when the corresponding regenerative payload base station moves out of coverage for connection to a terrestrial base station (e.g., NTN transparent base station, terrestrial network (TN) base station) and/or an NTN gateway connected to the terrestrial base station that set up/connected an Xn interface with the corresponding base station according to NGSO satellite movement, the corresponding Xn interface may be removed/released/reset/suspended.

As an example, an NG removal procedure may be defined to remove an interface instance between the corresponding regenerative payload base station and a core network node (AMF) in a controlled manner. Through the corresponding procedure, any application level configuration data present within both nodes may be removed/deleted/released.

As an example, an Xn removal procedure may be used to remove an interface instance between the corresponding regenerative payload base station and a terrestrial base station in a controlled manner. Through the corresponding procedure, any application level configuration data present within both nodes may be removed/deleted/released.

As another example, a regenerative base station may initiate the corresponding procedure by transmitting an Xn removal request message to a terrestrial base station. The regenerative base station may determine initiation of the corresponding procedure through ephemeris information, feeder link switch information, and the like. A terrestrial base station that received the corresponding message may respond with an Xn removal response message. A regenerative base station that received the corresponding response message may initiate removal of a transport network layer association (TNL association) to the corresponding terrestrial base station. The corresponding base station may remove all resources associated with the corresponding interface instance. Subsequently, the terrestrial base station may remove all resources associated with the corresponding interface instance.

As another example, a terrestrial base station may initiate the corresponding procedure by transmitting an Xn removal request message to a regenerative base station. For this, ephemeris information, feeder link switch information, etc. may be received/configured in advance by the terrestrial base station. The terrestrial base station may determine initiation of the corresponding procedure. A regenerative base station that received the corresponding message may respond with an Xn removal response message. A terrestrial base station that received the corresponding response message may initiate removal of a transport network layer association (TNL association) to the corresponding base station. The corresponding terrestrial base station may remove all resources associated with the corresponding interface instance. Subsequently, the regenerative base station may remove all resources associated with the corresponding interface instance.

As another example, an Xn removal request message and/or an Xn removal response message may include information about a time/timer value when the corresponding regenerative base station (and/or a cell associated/served by the corresponding base station, and/or a neighbor base station/cell of a cell served by the corresponding base station) will stop service (for a cell/area currently being covered). If the corresponding information is included in the corresponding message, the regenerative base station and/or terrestrial base station may use the corresponding information to consider removing the corresponding base station interface instance. (Or may accept/trigger/initiate removing the corresponding base station interface instance before the corresponding time.)

As another example, an Xn removal request message and/or an Xn removal response message may include one or more pieces of information among recommended/advisory/candidate base station identification information, GUAMI, AMF region (or AMF region ID), AMF Set ID, AMF pointer information, TNL association information that the corresponding base station may use later. The base station may perform Xn setup with the corresponding base station considering the corresponding information.

As another example, an Xn removal request message and/or an Xn removal response message may include next/expected/anticipated Xn setup timing information. The corresponding information may be indicated through any timing information exemplified in the disclosure (e.g., absolute time information, epoch time, etc.).

As another example, an Xn removal request message and/or an Xn removal response message may include ephemeris information of the corresponding base station (and/or a cell associated/served by the corresponding base station, and/or a neighbor base station/cell of a cell served by the corresponding base station). If the corresponding information is included in an Xn removal request/response message, the corresponding base station may consider the corresponding information. For example, it may accept/trigger/initiate setting up an interface instance with the corresponding base station at the corresponding time.

As another example, an XnAP reset procedure may be used to remove/release/reset an interface instance between the corresponding regenerative payload base station and a terrestrial base station in a controlled manner. Through the corresponding procedure, any application level configuration data present within both nodes may be removed/deleted/released. Through the corresponding procedure, interface resources and/or XnAP UE-related contexts may be initialized/removed/deleted/released.

As another example, an Xn reset message may include information for indicating to release all resources and/or UE contexts on the corresponding Xn interface and to prohibit the setup/addition/creation of any UE context on the corresponding Xn interface.

As another example, a regenerative base station may initiate the corresponding procedure by transmitting an Xn reset request message to a terrestrial base station. The regenerative base station may determine initiation of the corresponding procedure through ephemeris information, feeder link switch information, and the like. A terrestrial base station that received the corresponding message may respond with an Xn reset response message. The terrestrial base station may include information for indicating to release all allocated resources and/or UE contexts on the corresponding NG interface and to prohibit the setup/addition/creation of any UE context on the corresponding Xn interface.

As another example, an Xn reset request message and/or an Xn reset response message may include information about a time/timer value when the corresponding base station (and/or a cell associated/served by the corresponding base station, and/or a neighbor base station/cell of a cell served by the corresponding base station) will stop service (for a cell/area currently being covered). If the corresponding information is included in the corresponding message, the corresponding base station may use the corresponding information to consider releasing resources and UE contexts allocated to the corresponding interface. (Or may accept/trigger/initiate releasing resources and UE contexts allocated to the corresponding base station interface before the corresponding time.)

As another example, an Xn reset request message and/or an Xn reset response message may include one or more pieces of information among recommended/advisory/candidate base station identification information, globally unique AMF identifier (GUAMI), AMF region (or AMF region ID), AMF Set ID, AMF pointer information, TNL association information that may be used later. The base station may perform Xn setup considering the corresponding information.

As another example, an Xn reset request message and/or an Xn reset response message may include next/expected/anticipated Xn setup timing information. The corresponding information may be indicated through any timing information exemplified in the disclosure (e.g., absolute time information, epoch time, etc.).

As another example, an Xn reset request message and/or an Xn reset response message may include ephemeris information of the corresponding base station (and/or a cell associated/served by the corresponding base station, and/or a neighbor base station/cell of a cell served by the corresponding base station). If the corresponding information is included in the corresponding message, the corresponding base station may consider the corresponding information.

As another example, an Xn suspend procedure may be defined to suspend/stop an interface instance between the corresponding regenerative payload base station and a terrestrial base station in a controlled manner. Through the corresponding procedure, any application level configuration data present within both nodes may be suspended. For example, the corresponding supported parameter may be maintained without release. However, the regenerative base station and the terrestrial base station may suspend/stop any procedure and/or operation on the corresponding Xn interface. In association with the corresponding procedure, a procedure for releasing UE contexts on the corresponding Xn interface or transferring the corresponding UE contexts (e.g., UE context transfer, handover) may be performed. For example, an AN release procedure may be performed. Alternatively, in association with the corresponding procedure, a resource (e.g., TNL association) on the corresponding NG interface may be released. UE contexts on the corresponding NG interface may be initialized/removed/deleted/released. Any UE context on the corresponding NG interface may not be setup/added/created.

As another example, when an Xn resume message (or resume request message) is received, suspended application level configuration data present within both nodes on the suspended corresponding NG interface may be resumed.

As another example, when an Xn resume response/acknowledge message is received in response to an Xn resume request message, suspended application level configuration data present within both nodes on the suspended corresponding Xn interface may be resumed.

As another example, an Xn suspend request message may include information for indicating to release all resources and/or UE contexts on the corresponding Xn interface and not to setup/add/create any UE context on the corresponding Xn interface.

As another example, a regenerative base station may initiate the corresponding procedure by transmitting an Xn suspend/resume request message to a terrestrial base station. The regenerative base station may determine initiation of the corresponding procedure through ephemeris information, feeder link switch information, and the like. A terrestrial base station that received the corresponding message may respond with an Xn suspend/resume response/acknowledge message.

As another example, an Xn suspend request message and/or an Xn suspend response/acknowledge message may include information about a time/timer value when the corresponding base station (and/or a cell associated/served by the corresponding base station, and/or a neighbor base station/cell of a cell served by the corresponding base station) will stop service (for a cell/area currently being covered). If the corresponding information is included in the corresponding message, the regenerative base station and/or terrestrial base station may use the corresponding information to consider suspending resources and UE contexts allocated to the corresponding base station and the corresponding interface. (Or may accept/trigger/initiate suspending resources and UE contexts allocated to the corresponding base station interface before the corresponding time.)

As another example, an Xn suspend request message and/or an Xn suspend response/acknowledge message may include information about a time when the corresponding base station (and/or a cell associated/served by the corresponding base station, and/or a neighbor cell of a cell served by the corresponding base station) will resume service for an area currently being covered (or current corresponding AMF area/jurisdiction) (or time to resume the corresponding Xn interface connection). The corresponding information is represented as an integer value between (0..549755813887), and may be represented as a time in multiples of 10 ms after 00:00:00 on Gregorian calendar date 1 January, 1900 (midnight between Sunday, December 31, 1899 and Monday, January 1, 1900). A base station that received the corresponding information may store the corresponding information. A base station that received the corresponding information may consider the corresponding information.

As another example, an Xn suspend request message and/or an Xn suspend response/acknowledge message may include one or more pieces of information among recommended/advisory/candidate base station identification information, globally unique AMF identifier (GUAMI), AMF region (or AMF region ID), AMF Set ID, AMF pointer information, TNL association information that may be used later. The base station may perform Xn setup/resume considering the corresponding information.

As another example, an Xn suspend request message and/or an Xn suspend response/acknowledge message may include next/expected/anticipated Xn setup/resume timing information. The corresponding information may be indicated through any timing information exemplified in the disclosure (e.g., absolute time information, epoch time, etc.).

As another example, an Xn suspend message and/or an Xn suspend response/acknowledge message may include ephemeris information of the corresponding base station (and/or a cell associated/served by the corresponding base station, and/or a neighbor base station/cell of a cell served by the corresponding base station). If the corresponding information is included in an Xn removal request/response message, the corresponding base station may consider the corresponding information. For example, it may accept/trigger/initiate setting up/resuming an interface instance with the corresponding base station at the corresponding time.

As another example, an Xn setup procedure and/or an NG-RAN node configuration update procedure may be performed by associating base station parameters with ephemeris information and/or timing information.

As an example, epoch time or specific absolute time of the corresponding base station, ephemeris information at the corresponding epoch time or specific absolute time may be included in an Xn setup request message and/or an Xn setup response message (and/or NG-RAN node configuration update message, NG-RAN node configuration update acknowledge message). A regenerative base station may select/determine a tracking area code, RAN area code, (36-bit) cell identification information, AMF area information where a reference location (e.g., cell center, geographical point, geographical area) of the corresponding base station (or a (served) cell of the corresponding base station) is included at a satellite location determined according to ephemeris information (e.g., ephemerisInfo-r17) at the corresponding epoch time or absolute time. Alternatively, the corresponding base station may calculate/determine/compute a tracking area code, RAN area code, (36-bit) cell identification information, AMF area information currently broadcast from the corresponding base station (and/or a cell associated/served by the corresponding base station) determined according to ephemeris information. One or more information among a tracking area code, RAN area code, (36-bit) cell identification information, AMF area information currently broadcast from the corresponding base station (and/or a cell associated/served by the corresponding base station) may be included in an Xn setup request message and/or an Xn setup response message (and/or NG-RAN node configuration update message, NG-RAN node configuration update acknowledge message).

As another example, epoch time or specific absolute time of the corresponding base station, ephemeris information at the corresponding epoch time or specific absolute time may be included in an Xn setup request message and/or an Xn setup response message (and/or NG-RAN node configuration update message, NG-RAN node configuration update acknowledge message).

As another example, a time range (or time window)/duration during which the corresponding base station (or a (served) cell of the corresponding base station) parameter changes according to satellite movement and/or the corresponding base station parameter information for each corresponding time range/duration may be included in an Xn setup request message and/or an Xn setup response message (and/or NG-RAN node configuration update message, NG-RAN node configuration update acknowledge message). The corresponding base station may determine/select/calculate/compute a tracking area code, RAN area code, (36-bit) cell identification information, AMF area information where a reference location (e.g., cell center, geographical point, geographical area) of the corresponding base station (or a (served) cell of the corresponding base station) is included at a satellite location determined according to ephemeris information (e.g., ephemerisInfo-r17) at epoch time or absolute time. The corresponding base station may determine/select/calculate/compute a time range/duration during which the corresponding parameters of the corresponding base station (or a (served) cell of the corresponding base station) change according to satellite movement.

For example, an example of dividing a specific period (e.g., N hours, N days) into M time ranges/durations is illustrated. Corresponding base station parameters during T0-T1 time range/duration (e.g., TAI support list, AMF area information, served cell information list (List of Served Cells NR, with sub information Served Cell Information NR: NR-PCI, NG-CGI, TAC, RANAC (RAN area code), ···)), corresponding base station parameters during T1-T2 time range/duration (e.g., TAI support list, AMF area information, served/broadcast cell information list (List of Served Cells NR, with sub information Served Cell Information NR: NR-PCI, NG-CGI, TAC, RANAC (RAN area code), ···)), corresponding base station parameters during T2-T3 time range/duration (e.g., TAI support list, AMF area information, served/broadcast cell information list (List of Served Cells NR, with sub information Served Cell Information NR: NR-PCI, NG-CGI, TAC, RANAC (RAN area code), ···)), ···, corresponding base station parameters during T(M-2)-T(M-1) time range/duration (e.g., TAI support list, AMF area information, served/broadcast cell information list (List of Served Cells NR, with sub information Served Cell Information NR: NR-PCI, NG-CGI, TAC, RANAC (RAN area code), ···)) may be determined/selected/calculated/computed.

As another example, an Xn setup request message and/or an Xn setup response message (and/or NG-RAN node configuration update message, NG-RAN node configuration update acknowledge message) may include information about a time when the corresponding base station (and/or a cell associated/served by the corresponding base station, and/or a neighbor cell of a cell served by the corresponding base station) will stop service for an area currently being covered (or current corresponding AMF area/jurisdiction) (or time to stop/suspend Xn interface connection). The corresponding information is represented as an integer value between (0..549755813887) and may be represented as a time in multiples of 10 ms after 00:00:00 on Gregorian calendar date 1 January, 1900 (midnight between Sunday, December 31, 1899 and Monday, January 1, 1900). A base station that received the corresponding information may store the corresponding information. A base station that received the corresponding information may take into account the corresponding information.

As another example, an Xn setup request message and/or an Xn setup response message (and/or NG-RAN node configuration update message, NG-RAN node configuration update acknowledge message) may include ephemeris information for transmission. The corresponding ephemeris information represents information describing orbital trajectory information or coordinates for an NTN payload. The corresponding ephemeris information may provide one or more of an ephemeris format including NTN payload location and velocity state vectors, and/or an ephemeris format including Semi-major axis, Eccentricity, Argument of periapsis, Longitude of ascending node, Inclination, Mean anomaly at epoch time, and/or NTN gateway location and/or information for a feeder link switch.

NTN ephemeris information may include one or more of cell ephemeris (or cell list) associated with the corresponding base station, NTN payload ephemeris of an NTN payload serving cell, NTN payload ephemeris of a neighbor cell, feeder link ephemeris between the corresponding base station and AMF, (default/reference) NTN payload ephemeris of the corresponding base station.

As another example, an Xn setup request message and/or an Xn setup response message (and/or NG-RAN node configuration update message, NG-RAN node configuration update acknowledge message) may include feeder link related information. For example, it may include information about time ranges/durations for consecutive feeder link switches (for Quasi-Earth-fixed service link types). It may include information about consecutive serving NTN gateway schedules/times (for Earth moving service link types). The corresponding schedule/time information may be represented as one of the above-described epoch time and absolute time.

As another example, base station parameters may be selected at epoch time. Epoch time may represent a start time of a downlink subframe of the corresponding base station (or a (served) cell of the corresponding base station) indicated by SFN (e.g., sfn-r17) and subframe number (subFrameNR-r17). A tracking area code, RAN area code, (36-bit) cell identification information, AMF area information where a reference location (e.g., cell center and range, geographical point, geographical area) of the corresponding base station (or a (served) cell of the corresponding base station) is included at a satellite location determined according to ephemeris information (e.g., ephemerisInfo-r17) at the corresponding epoch time may be selected.

As another example, base station parameters may be selected at epoch time. Epoch time may represent a start time of a downlink subframe of the corresponding base station (or a (served) cell of the corresponding base station) indicated by SFN (e.g., sfn-r17) and subframe number (subFrameNR-r17). A tracking area code, RAN area code, (36-bit) cell identification information, AMF area information where a reference location (e.g., cell center, geographical point, geographical area) of the corresponding base station (or a (served) cell of the corresponding base station) is included at a satellite location determined according to ephemeris information (e.g., ephemerisInfo-r17) at the corresponding epoch time may be selected.

As another example, base station parameters may be selected at epoch time of a served cell of the corresponding base station when an Xn setup procedure is initiated/triggered. The corresponding epoch time may represent a start time of a downlink subframe of the corresponding base station (or a (served) cell of the corresponding base station) indicated by SFN (e.g., sfn-r17) and subframe number (subFrameNR-r17). The corresponding epoch time information may represent information being broadcast through system information 19 in a served cell. A tracking area code, RAN area code, (36-bit) cell identification information, AMF area information where a reference location (e.g., cell center, uplink time synchronization reference point of the cell, geographical point, geographical area) of the corresponding base station (or a (served) cell of the corresponding base station) is included at a satellite location determined according to ephemeris information (e.g., ephemerisInfo-r17) at the corresponding epoch time may be selected.

As another example, base station parameters may be selected at a specific absolute time. The corresponding absolute time is represented as an integer value between (0..549755813887), and may be represented as a time in multiples of 10 ms after 00:00:00 on Gregorian calendar date 1 January, 1900 (midnight between Sunday, December 31, 1899 and Monday, January 1, 1900). A tracking area code, RAN area code, (36-bit) cell identification information, AMF area information where a reference location (e.g., cell center, geographical point, geographical area) of the corresponding base station (or a (served) cell of the corresponding base station) is included at a satellite location determined according to ephemeris information (e.g., ephemerisInfo-r17) at the corresponding absolute time may be selected.

The following describes other embodiments of the disclosure.

From the perspective of a core network node (AMF/UPF), it is necessary to distinguish whether a base station connecting to the corresponding core network node (setting up an NG interface with the corresponding core network node) is a transparent payload supporting base station or a regenerative payload (supporting) base station. In the case of a transparent payload supporting base station, an NTN gateway included in the corresponding base station is positioned on the ground. Therefore, a core network node may perform NGAP signaling in the same way as a typical terrestrial base station. For example, an NG setup procedure according to conventional technology may be performed. On the other hand, in the case of a regenerative payload supporting base station, the corresponding base station is mounted on a satellite. Therefore, cases may arise where this needs to be considered when performing NGAP signaling.

For example, according to satellite movement, it may be checked whether a regenerative payload base station may connect (feeder link) with an NTN gateway connected to the corresponding core network node. If a regenerative payload base station moves out of connectable coverage/range with an NTN gateway connected to the corresponding core network node, at the corresponding time (or before the corresponding time), the corresponding core network node (e.g., AMF/UPF) may remove the corresponding NG interface, or for a UE connected to the corresponding NG interface, if it is an RRC connected state UE, handover may be performed, or if it is an RRC inactive UE, it may be transitioned to an RRC idle state through paging. Alternatively, if a core network node has an NTN gateway (e.g., target NTN gateway) that may connect to the corresponding regenerative payload through a transport network other than a previous/source NTN gateway, the core network node (e.g., AMF) may determine feeder link switchover from a source NTN gateway to a target NTN gateway for one regenerative payload base station for the corresponding regenerative payload.

Alternatively, if a core network node has an NTN gateway (e.g., target NTN gateway) that may connect to the corresponding regenerative payload through a transport network other than a previous/source NTN gateway, a base station may determine feeder link switchover from a source NTN gateway to a target NTN gateway for one regenerative payload base station for the corresponding regenerative payload. Alternatively, if a core network node has an NTN gateway (e.g., target NTN gateway) that may connect to the corresponding regenerative payload through a transport network other than a previous/source NTN gateway, an NTN control function (which controls the spaceborne (or airborne) vehicles as well as the radio resources of the NTN infrastructure (NTN payload(s) & NTN Gateway(s)), and provides control data (e.g. Ephemeris) to the non-NTN infrastructure gNB functions of the gNB.) may determine feeder link switchover from a source NTN gateway to a target NTN gateway for one regenerative payload base station for the corresponding regenerative payload.

During the corresponding feeder link switchover, a UE served through the corresponding regenerative base station maintains a Uu interface on a service link. During a feeder link switch process, some signaling/user data may be lost, but in the case of signaling, it may be recovered by SCTP. In the case of user data, if UPF transmits data sequentially or redundantly during a path switch process, the data loss may be very minor.

As an example, switchover may be initiated by a base station. A base station may calculate/compute/determine the corresponding time by recognizing ephemeris information, feeder link switch information. The corresponding base station may transmit information for requesting/indicating switchover to a core network node (e.g., AMF). For example, a regenerative base station may transmit information for indicating switchover included in a RAN configuration update message. Alternatively, information for indicating switchover may be transmitted included in any non-UE associated NGAP message. Alternatively, an AMF configuration update may be requested through a RAN configuration update message or any non-UE associated NGAP message.

As another example, a base station may send updated information (e.g., NG-RAN TNL Association Address) connected through a target NTN gateway included in a RAN configuration update message. If the corresponding information is received, an AMF may update NG-RAN TNL endpoint(s) and AMF TNL endpoint(s) indicated by the base station.

As another example, a base station may include TNL Association information to be removed connected through a source NTN gateway, TNL Association information to be added connected through a target NTN gateway in a RAN configuration update message. If the corresponding information is received, an AMF may remove TNL associations by NG-RAN TNL endpoint(s) and AMF TNL endpoint(s) to be removed indicated by the base station.

If the corresponding information is received, an AMF may add TNL associations by NG-RAN TNL endpoint(s) and AMF TNL endpoint(s) to be added indicated by the base station.

As another example, by request of a base station or by AMF's own decision (e.g., receiving ephemeris information, feeder link switch information and calculating/computing/determining the corresponding time), an AMF may send updated information (e.g., AMF TNL Association Address) connected through a target NTN gateway included in an AMF configuration update message. Alternatively, an AMF may include TNL Association information to be removed connected through a source NTN gateway, TNL Association information connected through a target NTN gateway in an AMF configuration update message. If the corresponding information is received, a base station may remove TNL associations by NG-RAN TNL endpoint(s) and AMF TNL endpoint(s) to be removed indicated by the AMF.

If the corresponding information is received, a base station may add TNL associations by NG-RAN TNL endpoint(s) and AMF TNL endpoint(s) to be added indicated by the AMF.

A base station may respond with an AMF configuration update acknowledge message.

As another example, a core network node may perform an NG procedure by distinguishing an NTN regenerative payload base station positioned in a non-terrestrial (satellite) environment from an NTN transparent payload base station positioned on the ground. To that end, a base station may transmit the distinction indication information indicating the type of the base station (regenerative or transparent) to a core network node.

As an example, when a base station transmits an NG setup request message to an AMF, whether the corresponding base station supports a regenerative payload (or NTN payload type or whether the corresponding base station is satellite-mounted) may be indicated. The corresponding indication information may be explicitly indicated or may be implicitly conveyed based on other included information.

As another example, when a base station transmits an NG setup request message to an AMF, an information element for indicating whether the corresponding base station supports a regenerative payload may be set to true and transmitted. When the corresponding information element is set to true, the AMF may optimize NG-C signaling to the corresponding base station based on this indication.

As another example, when an AMF transmits an NG setup response message in response to an NG setup request message, information for indicating whether the corresponding AMF supports a regenerative payload may be included. If the corresponding information is included, a base station may consider that the AMF supports a regenerative payload. A base station may store and utilize the corresponding information.

As another example, a base station may transmit ephemeris information and/or NTN support related information included in an NG setup request message. The corresponding ephemeris information represents information describing orbital trajectory information or coordinates for an NTN payload. The corresponding ephemeris information and/or NTN support related information may include one or more of i) aa format including NTN payload location and velocity state vectors and/or ii) a format including Semi-major axis, Eccentricity, Argument of periapsis, Longitude of ascending node, Inclination, Mean anomaly at epoch time and/or NTN gateway location and/or NTN gateway transport network information and/or feeder link switch information.

NTN ephemeris information may include one or more of ephemeris of a cell (or cell list) associated/served by the corresponding base station, NTN payload ephemeris of a cell served by an NTN payload, NTN payload ephemeris of a neighbor cell, feeder link ephemeris between the corresponding base station and AMF, (default/reference) NTN payload ephemeris of the corresponding base station.

As another example, the corresponding NTN ephemeris information may be provided to an AMF by an operation and maintenance server (O&M). The corresponding information may be utilized upon receiving an NG setup request message from a base station or during an NG setup procedure with a base station.

As another example, when a base station transmits an NG setup request message (and/or RAN configuration update message) to a core network node, the corresponding message may include feeder link switch information. For example, it may include information about time ranges/durations for consecutive feeder link switches (for Quasi-Earth-fixed service link types). It may include information about consecutive serving NTN gateway schedules/times (for Earth moving service link types).

As another example, a base station may determine/select/calculate/compute a time when feeder link switchover is performed between a base station (or NTN regenerative payload) and a core network node (AMF/UPF). For soft feeder link switchover (e.g., seamless feeder link switchover), an NTN regenerative payload may be connected to one or more NTN gateways during the corresponding time/period. A service link between a UE and a base station may be maintained during a feeder link switch. Accordingly, a feeder link switch may be performed without handover.

As another example, an NTN control function that controls radio resources of an NTN payload and an NTN gateway may determine a time when feeder link switchover is performed between a base station (or NTN regenerative payload) and a core network node (AMF/UPF). For soft feeder link switchover, an NTN regenerative payload may be connected to one or more NTN gateways during the corresponding time/period. A service link between a UE and a base station may be maintained during a feeder link switch. Accordingly, a feeder link switch may be performed without handover.

From a base station perspective, it is necessary to distinguish whether a base station connecting to the corresponding base station (setting up an Xn interface with the corresponding base station) is a transparent payload supporting base station or a regenerative payload supporting base station. In the case of a transparent payload supporting base station, an NTN gateway included in the corresponding base station is positioned on the ground. Therefore, if a terrestrial base station is connected to a transparent payload supporting base station through an Xn interface, Xn signaling may be performed in the same way as a conventional terrestrial network base station. For example, an Xn setup procedure according to conventional technology may be performed. On the other hand, in the case of a regenerative payload supporting base station, the corresponding base station is mounted on a satellite. Therefore, cases may arise where this needs to be considered when performing Xn signaling.

For example, when one base station is a regenerative payload base station and another base station is a transparent payload base station or a general TN base station positioned on the ground, connectivity between a satellite-positioned base station and a terrestrial base station (e.g., transparent payload base station or general TN base station positioned on the ground) may be checked. According to satellite movement, a regenerative payload base station may check whether it may connect (feeder link) with an NTN gateway connected to a terrestrial base station to manage/control the connection between the corresponding base station and the terrestrial base station.

As an example, if a regenerative payload base station moves out of connectable coverage/range with an NTN gateway connected to the corresponding terrestrial network, at the corresponding time (or before the corresponding time), the corresponding terrestrial base station may initiate/trigger removal of the corresponding Xn interface. Alternatively, if a regenerative payload base station moves out of connectable coverage/range with an NTN gateway connected to the corresponding terrestrial network, at the corresponding time (or before the corresponding time), removal of an Xn interface with the corresponding terrestrial base station may be initiated/triggered.

As another example, if a terrestrial base station has an NTN gateway (e.g., target NTN gateway) that may connect to the corresponding regenerative payload through a transport network other than a previous/source NTN gateway, the terrestrial base station may determine feeder link switchover from a source NTN gateway to a target NTN gateway for one regenerative payload base station for the corresponding regenerative payload. Alternatively, if a terrestrial base station has an NTN gateway (e.g., target NTN gateway) that may connect to the corresponding regenerative payload through a transport network other than a previous/source NTN gateway, a regenerative base station may determine feeder link switchover from a source NTN gateway to a target NTN gateway for one regenerative payload base station for the corresponding regenerative payload.

Alternatively, if a terrestrial base station has an NTN gateway (e.g., target NTN gateway) that may connect to the corresponding regenerative payload through a transport network other than a previous/source NTN gateway, an NTN control function (which controls the spaceborne (or airborne) vehicles and the radio resources of the NTN infrastructure (NTN payload(s) & NTN Gateway(s)), and provides control data (e.g. Ephemeris) to the non-NTN infrastructure gNB functions of the gNB.) may determine feeder link switchover from a source NTN gateway to a target NTN gateway for one regenerative payload base station for the corresponding regenerative payload.

During the corresponding feeder link switchover, a UE served through the corresponding regenerative base station maintains a Uu interface on a service link.

As another example, switchover may be initiated by a regenerative base station. A base station may calculate/compute/determine the corresponding time by recognizing ephemeris information, feeder link switch information. The corresponding base station may transmit information for requesting/indicating switchover to a terrestrial base station. For example, a regenerative base station may transmit information for indicating switchover included in an NG-RAN node configuration update message. Alternatively, information for indicating switchover may be transmitted as part of any non-UE associated XnAP message. Alternatively, a configuration update for the base station may be requested/indicated through an NG-RAN node configuration update message or any non-UE associated NGAP message.

As another example, a regenerative base station may send updated information (e.g., NG-RAN TNL Association information/transport layer information) connected through a target NTN gateway included in an NG-RAN node configuration update message. If the corresponding information is received, a terrestrial base station may update a TNL association indicated by transport layer information (endpoint IP address, port number) of a regenerative base station indicated by the regenerative base station.

As another example, a regenerative base station may include TNL Association information to be removed connected through a source NTN gateway, TNL Association information to be added connected through a target NTN gateway in an NG-RAN node configuration update message. If the corresponding information is received, a terrestrial base station may remove a TNL association by transport layer information (endpoint IP address, port number) to be removed indicated by the regenerative base station.

If the corresponding information is received, a terrestrial base station may add a TNL association by transport layer information (endpoint IP address, port number) to be added indicated by the regenerative base station.

As another example, by request of a regenerative base station or by decision of a terrestrial base station (e.g., receiving ephemeris information, feeder link switch information and calculating/computing/determining the corresponding time), a terrestrial base station may send updated information (e.g., NG-RAN TNL Association information/transport layer information) connected through a target NTN gateway included in an NG-RAN node configuration update message. If the corresponding information is received, a regenerative base station may update a TNL association indicated by transport layer information (endpoint IP address, port number) of a regenerative base station indicated by the terrestrial base station.

As another example, by request of a regenerative base station or by decision of a terrestrial base station (e.g., receiving ephemeris information, feeder link switch information and calculating/computing/determining the corresponding time), a terrestrial base station may include TNL Association information to be removed connected through a source NTN gateway, TNL Association information to be added connected through a target NTN gateway in an NG-RAN node configuration update message. If the corresponding information is received, a terrestrial base station may remove a TNL association by transport layer information (endpoint IP address, port number) to be removed indicated by the regenerative base station.

If the corresponding information is received, a terrestrial base station may add a TNL association by transport layer information (endpoint IP address, port number) to be added indicated by the regenerative base station.

A base station may respond with an NG-RAN node configuration update acknowledge message.

As another example, when a regenerative base station or a terrestrial base station controls XnAP signaling, this may be considered and processed. For example, when one base station is a regenerative payload base station and another base station is a transparent payload base station (or a general TN base station positioned on the ground), any Xn procedure may be performed considering the propagation delay and/or the availability of the Xn interface between a satellite-positioned base station and a terrestrial base station.

As an example, when a base station transmits an Xn setup request message to another base station, whether the corresponding base station supports a regenerative payload (or NTN payload type or whether the corresponding base station is satellite-mounted) may be indicated. The corresponding indication information may be indicated through explicit indication information, or may be implicitly indicated through other information.

As another example, when a base station transmits an Xn setup request message to another base station, an information element for indicating whether the corresponding base station supports a regenerative payload may be set to true and transmitted. When the corresponding information element is set to true, a base station that received the corresponding information may consider this to optimize Xn control (Xn-C) signaling to the corresponding base station.

As another example, when a base station transmits an Xn setup response message in response to an Xn setup request message, information for indicating whether the corresponding base station supports a regenerative payload may be included. If the corresponding information is included, a base station may consider that the corresponding base station supports a regenerative payload. A base station may store and manage the corresponding information.

As another example, a base station may transmit ephemeris information and/or NTN support related information included in an Xn setup request message. The corresponding ephemeris information represents information describing orbital trajectory information or coordinates for an NTN payload. The corresponding ephemeris information may include one or more of an ephemeris format including NTN payload location and velocity state vectors, and/or an ephemeris format including Semi-major axis, Eccentricity, Argument of periapsis, Longitude of ascending node, Inclination, Mean anomaly at epoch time, and/or NTN gateway location and/or NTN gateway transport network information and/or feeder link switch information.

NTN ephemeris information may include one or more of ephemeris of a cell (or cell list) associated/served by the corresponding base station, NTN payload ephemeris of a cell served by an NTN payload, NTN payload ephemeris of a neighbor cell, NTN payload ephemeris of a feeder link between the corresponding regenerative base station and another terrestrial base station, (default/reference) NTN payload ephemeris of the corresponding base station.

As another example, when a base station transmits an Xn setup request message (and/or NG-RAN node configuration update message) to a core network node, the corresponding message may include feeder link switch information. For example, it may include information about time ranges/durations for consecutive feeder link switches (for Quasi-Earth-fixed service link types). It may include information about consecutive serving NTN gateway schedules/times (for Earth moving service link types).

As another example, a regenerative base station (or terrestrial base station) may determine/select/calculate/compute a time when feeder link switchover is performed between a base station (or NTN regenerative payload) and a terrestrial base station. For a soft feeder link switchover, an NTN regenerative payload may be connected to one or more NTN gateways during the corresponding time/period. A service link between a UE and a base station may be maintained during a feeder link switch. Accordingly, a feeder link switch may be performed without handover.

As another example, an NTN control function that controls radio resources of an NTN payload and an NTN gateway may determine a time when feeder link switchover is performed between a base station (or NTN regenerative payload) and a terrestrial base station. For a soft feeder link switchover, an NTN regenerative payload may be connected to one or more NTN gateways during the corresponding time/period. A service link between a UE and a base station may be maintained during a feeder link switch. Accordingly, a feeder link switch may be performed without handover.

As another example, when a source base station transmits a handover request message, the corresponding base station may start a timer for limiting the corresponding time in a source base station. For example, a timer (TXnRELOCprep: specifies the maximum time for the Handover Preparation procedure in the source NG-RAN node) that specifies a maximum time for a handover preparation procedure in a source base station may be started. If a source base station is an NTN regenerative payload base station and a target base station is a terrestrial base station, the corresponding timer may be operated considering a round trip delay between a satellite and ground (e.g., NTN gateway). If a target base station is an NTN regenerative payload base station and a source base station is a terrestrial base station, the corresponding timer may be operated considering a round trip delay between a satellite and ground (e.g., NTN gateway).

A source base station may set the corresponding timer (expiration) value by adding a round trip delay value between a satellite and ground (e.g., NTN gateway) (or a value considered including this) to a normal handover preparation timer (TXnRELOCprep) (expiration) value on an Xn interface between terrestrial base stations (or an Xn interface between regenerative base stations). Alternatively, a source base station may start the corresponding timer after accounting for a round trip delay value between a satellite and ground (e.g., NTN gateway) (or a value considered including this).

According to the embodiments described above, an NTN regenerative payload-based base station interface may be effectively controlled.

The following briefly describes configurations of a regenerative payload base station and a core network entity that perform the above-described operations. The regenerative payload base station and core network entity below may perform the operations according to the embodiments described above.

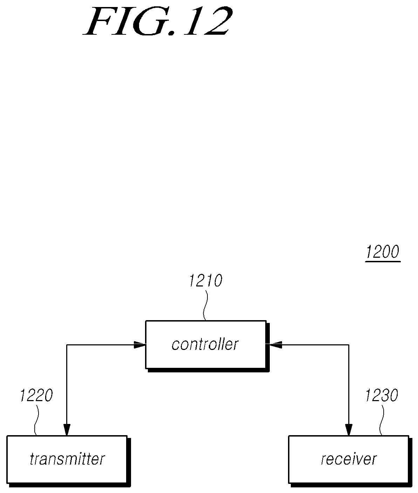

FIG. 12 is a block diagram illustrating a regenerative payload base station 1200 according to an embodiment.

Referring to FIG. 12, a regenerative payload base station 1200 performs communication according to the embodiments. The regenerative payload base station 1200 may include a transmitter 1220 that transmits an NG removal request message to a core network entity, a receiver 1230 that receives an NG removal response message from a core network entity, and a controller 1210 that initiates a transport network layer (TNL) connection removal operation for a core network entity and removes a resource associated with an interface instance.

According to an embodiment, the transmitter 1220 may transmit an NG removal request message to a core network entity through an NG interface. The NG removal request message may be triggered by movement of a satellite on which the regenerative payload base station is mounted. For example, a regenerative payload base station may be mounted on a satellite and thus moves. According to the satellite's movement, a service coverage area (terrestrial area) of the regenerative payload base station may change. Therefore, transmission of an NG removal request message from a regenerative payload base station may be triggered according to satellite movement.

As described above, the regenerative payload base station is associated with another regenerative payload base station through an Xn interface via an inter-satellite link and may be associated with a core network entity through an NG interface. In other words, a regenerative payload base station is mounted on a satellite and moves. The regenerative payload base station may form an Xn interface as an inter-satellite link to configure an interface with another regenerative payload base station. That is, the inter-satellite link may be serve as an Xn interface. Meanwhile, it may be associated with a core network entity through an NG interface. An NG interface may be configured as a feeder link between an NTN gateway and a regenerative payload base station. Between an NTN gateway and a core network entity, it may be configured as a feeder link or wired link. Meanwhile, a core network entity may be an AMF.

An NG removal procedure is a procedure that enables controlled removal of an interface instance between a regenerative payload base station and a core network entity. Through the NG removal procedure, removal (e.g., deletion or release) of application level configuration data present within both nodes may be performed.

The receiver 1230 may receive an NG removal response message from a core network entity after transmitting an NG removal request message. This constitutes the operation of the above-described NG removal procedure. If the core network entity receives an NG removal request message from the regenerative payload base station, it should transmit an NG removal response message.

The core network entity may remove a resource associated with an interface instance of the regenerative payload base station. For example, the core network entity may remove or release all resources associated with an interface instance with the regenerative payload base station that received the NG removal request message.

If an NG removal response message is received, the controller 1210 may initiate a TNL connection removal operation for a core network entity. Further, if an NG removal response message is received, the controller 1210 may remove or release all resources associated with an interface instance with the corresponding core network entity.

Meanwhile, when feeder link switchover occurs, the transmitter 1220 may transmit an NGAP message including indication information for requesting to suspend or resume one or more data and signaling procedures through an NG interface to a core network entity.

For example, the NGAP message may be an NG suspend request message or an NG resume request message. The NGAP message may include indication information for indicating suspension or resumption of an NG interface.

If the core network entity receives an NGAP message, it may transmit a response message thereto. An NG suspend or resume procedure is initiated by the above-described NGAP message, and even when a regenerative payload base station moves, an NG interface may be suspended or resumed in a controlled manner through an NG suspend or resume procedure.

For example, an NG suspend or resume procedure may be defined to suspend/resume an interface instance between a regenerative payload base station and a core network node (AMF) in a controlled manner. Through the corresponding procedure, any application level configuration data present within both nodes may be suspended or resumed. For example, a supported tracking area (TA) list (with sub information such as TAC, broadcast PLMN list, configured TAC indication, radio access technology (RAT) information) may be maintained or reused without release.

The core network entity may suspend or resume one or more data and signaling procedures through an NG interface based on indication information for requesting suspension or resumption.

Further, the controller 1210 controls overall operations of the base station 1200 according to operations for NG interface control with a core network entity necessary to perform the above-described embodiments.

The transmitter 1220 and receiver 1230 are used to transmit/receive a signal, message, and data necessary to perform the above-described embodiment with a core network entity or UE.

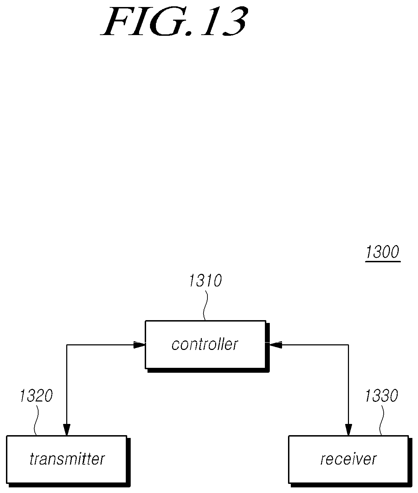

FIG. 13 is a block diagram illustrating a core network entity 1300 according to an embodiment.

Referring to FIG. 13, a core network entity 1300 performs communication with a regenerative payload base station according to the embodiments. The core network entity 1300 may include a receiver 1330 that receives an NG removal request message from a regenerative payload base station, a controller 1310 that removes a resource associated with an interface instance of a regenerative payload base station, and a transmitter 1320 that transmits an NG removal response message for an NG removal request message to a regenerative payload base station.

For example, the receiver 1330 may receive an NG removal request message from a regenerative payload base station through an NG interface. The NG removal request message may be triggered by movement of a satellite on which the regenerative payload base station is mounted. For example, a regenerative payload base station is mounted on a satellite and thus moves. According to the satellite's movement, a service coverage area (terrestrial area) of the regenerative payload base station may change. Therefore, transmission of an NG removal request message from a regenerative payload base station may be triggered according to satellite movement.

As described above, the regenerative payload base station is associated with another regenerative payload base station through an Xn interface via an inter-satellite link, and may be associated with a core network entity through an NG interface. In other words, a regenerative payload base station is mounted on a satellite and moves. The regenerative payload base station may form an Xn interface as an inter-satellite link to configure an interface with another regenerative payload base station. That is, an inter-satellite link may serve as an Xn interface. Meanwhile, a core network entity may be associated with a regenerative payload base station through an NG interface. An NG interface may be configured as a feeder link between an NTN gateway and a regenerative payload base station. Between an NTN gateway and a core network entity, it may be configured as a feeder link or wired link. Meanwhile, a core network entity may be an AMF.

An NG removal procedure is a procedure that enables controlled removal of an interface instance between a regenerative payload base station and a core network entity. Through the NG removal procedure, removal (e.g., deletion or release) of application level configuration data present within both nodes may be performed.

When an NG removal request message is received, the transmitter 1320 may transmit an NG removal response message to a regenerative payload base station. This constitutes the operation of the above-described NG removal procedure. If the core network entity receives an NG removal request message from a regenerative payload base station, it should transmit an NG removal response message.

The controller 1310 may remove a resource associated with an interface instance of a regenerative payload base station. For example, the controller 1310 may remove or release all resources associated with an interface instance with a regenerative payload base station that received the NG removal request message.

The regenerative payload base station may also initiate a transport network layer (TNL) connection removal operation for the core network entity and remove a resource associated with an interface instance.

Meanwhile, when feeder link switchover occurs at a regenerative payload base station, the receiver 1330 may receive an NGAP message including indication information for requesting to suspend or resume one or more data and signaling procedures through an NG interface from the regenerative payload base station.

For example, the NGAP message may be an NG suspend request message or an NG resume request message. The NGAP message may include indication information for indicating suspension or resumption of an NG interface.

When the transmitter 1320 receives an NGAP message, it may transmit a response message thereto. An NG suspend or resume procedure is initiated by the above-described NGAP message, and even when a regenerative payload base station moves, an NG interface may be suspended or resumed in a coordinated manner through an NG suspend or resume procedure.

For example, an NG suspend or resume procedure may be defined to suspend/resume an interface instance between a regenerative payload base station and a core network node (AMF) in a coordinated manner. Through the corresponding procedure, any application level configuration data present within both nodes may be suspended or resumed. For example, a supported tracking area (TA) list (with sub information such as TAC, broadcast PLMN list, configured TAC indication, radio access technology (RAT) information) may be maintained or reused without release.

The controller 1310 may suspend or resume a data and signaling procedure through an NG interface based on indication information for requesting suspension or resumption.

Further, the controller 1310 controls overall operations of the core network entity 1300 according to operations for NG interface control with a regenerative payload base station necessary to perform the above-described embodiments.

The transmitter 1320 and receiver 1330 are used to transmit/receive a signal, message, and data necessary to perform the above-described embodiment with a regenerative payload base station.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for performing communication by a regenerative payload base station, comprising:
transmitting a Next Generation (NG) removal request message to a core network entity;
receiving an NG removal response message from the core network entity; and
initiating a transport network layer (TNL) connection removal operation for the core network entity and removing resources associated with an interface instance.

2. The method of claim 1, wherein the NG removal request message is triggered by movement of a satellite on which the regenerative payload base station is mounted.

3. The method of claim 1, wherein the regenerative payload base station is associated with another regenerative payload base station via an Xn interface through an inter-satellite link and is associated with the core network entity via an NG interface.

4. The method of claim 1, further comprising, when feeder link switchover occurs, transmitting a Next Generation Application Protocol (NGAP) message including indication information for requesting to suspend or resume a data and signaling procedure through an NG interface to the core network entity.

5. The method of claim 4, wherein the core network entity suspends or resumes the data and signaling procedure through the NG interface based on the indication information for requesting to suspend or resume.

6. The method of claim 1, wherein the core network entity removes resources associated with an interface instance of the regenerative payload base station.

7. A method for performing communication by a core network entity with a regenerative payload base station, comprising:
receiving a Next Generation (NG) removal request message from the regenerative payload base station; and
removing resources associated with an interface instance of the regenerative payload base station and transmitting an NG removal response message to the NG removal request message to the regenerative payload base station.

8. The method of claim 7, wherein the NG removal request message is triggered by movement of a satellite on which the regenerative payload base station is mounted.

9. The method of claim 7, wherein the regenerative payload base station is associated with another regenerative payload base station via an Xn interface through an inter-satellite link, and is associated with the core network entity via an NG interface.

10. The method of claim 7, further comprising, when feeder link switchover occurs at the regenerative payload base station, receiving a Next Generation Application Protocol (NGAP) message including indication information for requesting to suspend or resume a data and signaling procedure through an NG interface from the regenerative payload base station.

11. The method of claim 10, wherein the core network entity suspends or resumes the data and signaling procedure through the NG interface based on the indication information for requesting to suspend or resume.

12. A regenerative payload base station performing communication, comprising:
a transmitter transmitting a Next Generation (NG) removal request message to a core network entity;
a receiver receiving an NG removal response message from the core network entity; and
a controller initiating a transport network layer (TNL) connection removal operation for the core network entity and removing resources associated with an interface instance.

13. The regenerative payload base station of claim 12, wherein the NG removal request message is triggered by movement of a satellite on which the regenerative payload base station is mounted.

14. The regenerative payload base station of claim 12, wherein the regenerative payload base station is associated with another regenerative payload base station via an Xn interface through an inter-satellite link and is associated with the core network entity via an NG interface.

15. The regenerative payload base station of claim 12, wherein the transmitter transmits a Next Generation Application Protocol (NGAP) message including indication information for requesting to suspend or resume a data and signaling procedure through an NG interface to the core network entity when feeder link switchover occurs.
